# EUROPÄISCHE PATENTSCHRIFT

(11) **EP 2 361 452 B1**
(45) Veröffentlichungstag und Bekanntmachung des Hinweises auf die Patenterteilung: **20.09.2017**
(21) Anmeldenummer: 09799277.0
(22) Anmeldetag: 21.12.2009
(51) Int. Cl.: H01R 13/717, H01R 13/655, H01R 24/78, H02G 3/08, H02G 3/18, H01R 103/00

(54) **ELEKTRISCHES INSTALLATIONSGERÄT**
ELECTRIC INSTALLATION APPLIANCE
EQUIPEMENT D'INSTALLATION ELECTRIQUE

(30) Priorität: 22.12.2008 DE 102008064454
(43) Veröffentlichungstag der Anmeldung: 31.08.2011
(73) Patentinhaber: Schneider Electric Industries SAS, 92500 Rueil-Malmaison (FR)
(72) Erfinder: VICKTORIUS, Richard, 50733 Köln (DE)
(74) Vertreter: Manitz Finsterwald Patentanwälte PartmbB
(86) Internationale Anmeldenummer: PCT/EP2009/009185
(87) Internationale Veröffentlichungsnummer: WO 2010/072393

(56) Entgegenhaltungen:
- EP-A1- 1 041 693
- EP-A1- 1 610 422
- DE-U1-202006 006 105
- US-A1- 2008 166 914

## Beschreibung

Die Erfindung betrifft ein elektrisches Installationsgerät nach dem Oberbegriff des Patentanspruchs 1 (vgl. EP 1 10 422 A1 oder DE 20 200 006105 U1).

Im Rahmen der Gebäudeinstallationstechnik können elektrische Installationsgeräte dazu verwendet werden, elektrische Verbraucher mittels Steckdosen mit Energie zu versorgen oder mittels Schaltelementen die Energieversorgung von elektrischen Verbrauchern zu steuern. Solche Installationsgeräte können ortsfest angeordnet sein und umfassen einen Gerätesockel, den außenseitig ein Tragrahmen umgibt, der die Befestigung in einem Installationsgehäuse ermöglicht. Frontseitig ist ein Frontelement befestigt, das abhängig von der Ausführungsform ein- oder mehrteilig ausgebildet sein kann. Für besondere Anwendungen, beispielsweise um das Installationsgerät selbst bzw. die Umgebung zu beleuchten und/oder um spezielle Funktionszustände anzuzeigen, können die Installationsgeräte optische Signaleinrichtungen aufweisen, die in das Frontelement in verschiedener Art und Weise integriert sein können.

Aus dem Stand der Technik sind Installationsgeräte mit seitlich des Gerätesockels angeordneten Signaleinrichtungen bekannt, welche ein Fenster in einem Frontelement ausleuchten. Des Weiteren ist im Stand der Technik offenbart, Beleuchtungseinrichtungen in die Frontflächen, Rahmen und/oder Schaltelemente zu integrieren. Die jeweiligen Lichtaustrittsflächen sind auch im unbenutzten Zustand sichtbar und unterbrechen die Oberfläche des Frontelementes. Die Lichtstärke und die Lichtverteilung der Beleuchtung sind durch die Lichtquelle und die Lichtaustrittsfläche unveränderbar vorgegeben.

Darüber hinaus sind Leuchtmittel bekannt, die als kompakter Körper direkt in eine Steckdose eingesteckt werden können und die auf der den elektrischen Anschlüssen abgewandten Seite Lichtquellen aufweisen, die als Markierungsleuchte einen Raum zumindest teilweise beleuchten oder als Orientierungslicht in einem Raum verwendet werden.

Die Aufgabe der vorliegenden Erfindung besteht darin, ein elektrisches Installationsgerät zu schaffen, das eine variable Beleuchtung ermöglicht und optisch ansprechend ausgebildet ist.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass durch die Integration eines verstellbaren Beleuchtungselementes in ein elektrisches Installationsgerät eine bedarfsgerechte Anpassung der Beleuchtung an wechselnde Anforderungen am Montageort, beispielsweise hinsichtlich des Beleuchtungszeitraumes, der Lichtmenge und der Lichtverteilung, realisiert werden kann. Des Weiteren können unterschiedliche Beleuchtungsanforderungen an verschiedenen Montageorten ohne gerätespezifische Veränderungen mit dem gleichen Installationsgerät erfüllt werden. Durch die Verstellbarkeit des Elementes kann von einer gerätespezifischen Vollbeleuchtung bis zu einer Abschaltung oder vollständigen Abdeckung der Beleuchtung variiert werden. Somit kann die bisherige Funktionalität eines Installationsgerätes deutlich verbessert werden.

Elektrische Installationsgeräte können einen Gerätesockel und ein vorgesetztes nutzerseitig sichtbares Frontelement aufweisen, welches ein- oder mehrteilig ausgestaltet sein kann. Das Frontelement kann zumindest einen Zentraleinsatz mit einer Aufnahme für einen Gerätestecker oder mit einem Schaltelement umfassen und kann optional von einem Rahmen umgeben sein. Das verstellbare Element kann an oder in dem Frontelement angeordnet sein und kann im Installationsgerät erzeugtes Licht durch einen lichtdurchlässigen Bereich nutzerseitig abstrahlen.

Das verstellbare Element kann eine längliche Form aufweisen und kann in Längserstreckung axial verstellbar in einer Aufnahme des Frontelementes gelagert sein, beispielsweise durch eine durch das Element verlaufende Achse oder am Element angeordnete Achsstummel, die in komplementären Lageröffnungen geführt werden können.

Vorteilhafterweise ist der Verstellweg des Elementes in vordefinierte Positionen unterteilt. Eine Positionierung des Elementes in verschiedenen Stellungen kann durch Reibschluss zwischen dem Element und dem umgebenden Frontelement erfolgen, wobei durch erhöhten Reibschluss vordefinierte Positionen erreicht werden können. In weiterer Ausgestaltung kann ein federunterstützter Rastmechanismus zwischen dem Element und dem Frontelement für die Verstellung und Positionierung angeordnet werden.

Das verstellbare Element kann einen Sichtteil und einen Beleuchtungsteil umfassen, die winklig zueinander angeordnet sein können. Vorteilhafterweise können die beiden Teile einstückig miteinander verbunden sein. Das Sichtteil kann nutzerseitig angeordnet werden und den Lagermechanismus des Elementes aufweisen. In einer Stellung des verstellbaren Elementes kann das Sichtteil flächig in das Frontelement integriert sein, während der winklig dazu angeordnete Beleuchtungsteil versenkt innerhalb bzw. unterhalb des Frontelementes angeordnet sein kann. In dieser Stellung tritt gar kein Licht oder nur ein beispielsweise als Orientierungslicht dienender Lichtstreifen aus dem Installationsgerät aus. Zur Beleuchtungszwecken kann das verstellbare Element aus der vorbeschriebenen Stellung auswärts verschwenkt werden, so dass das Beleuchtungsteil sichtbar wird und durchdringendes Licht zur Beleuchtung zur Verfügung steht. In Abhängigkeit von dem Verschwenkungsgrad des verstellbaren Elementes verändert sich die Beleuchtungsfläche.

Zur Betätigung des verstellbaren Elementes kann vorteilhafterweise ein Handhabungselement ausgebildet sein, das weitestgehend in das Sichtteil integriert ist, beispielsweise durch einen Hinterschnitt oder durch einen Vorsprung. Besonders vorteilhaft kann hierbei ein Feder-RastMechanismus für die Verstellung des Elementes sein, da zur Betätigung ausschließlich Druck auf das Sichtteil ausgeübt werden muss und keine Handhabungselemente notwendig sind. In einer weiteren Ausführungsform kann eine motorische Variante realisiert werden, die beispielsweise eine fernbetätigbare Positionssteuerung des verstellbaren Elementes ermöglicht und beispielsweise mit einer Lichtsteuerung kombiniert werden kann.

Das verstellbare Element kann bodenseitig des Installationsgerätes angeordnet werden, um einen Bodenbereich eines Raumes oder einer Freifläche auszuleuchten und dient als Markierungs- bzw. Orientierungslicht. Des Weiteren kann das Installationsgerät auch zur Objektbeleuchtung eingesetzt werden, sofern die zu beleuchtenden Objekte im Erfassungsbereich des Lichtes liegen. Hierzu kann das Installationsgerät in entsprechender Orientierung montiert werden. In weiterer Ausgestaltung kann das Installationsgerät mehrere verstellbare Elemente aufweisen, um komplexe Beleuchtungsanforderungen erfüllen zu können. Das verstellbare Element kann in einem Zentraleinsatz oder in einem umgebenden Rahmen eines mehrteiligen Frontelementes oder an beliebiger Stelle eines einteiligen Frontelementes angeordnet sein. Als Installationsgeräte werden Steckdosen, Schalter und weitere elektrische/elektronische Geräte der Installationstechnik verstanden.

Das Beleuchtungsteil des verstellbaren Elementes kann zumindest einen lichtdurchlässigen Bereich umfassen, der das innerhalb des Installationsgerätes erzeugte Licht nach außen leiten kann. Das Licht kann radial von dem lichtdurchlässigen Bereich abgestrahlt werden, um eine gleichmäßige Ausleuchtung zu erhalten. Hierzu kann zumindest der lichtdurchlässige Bereich gekrümmt ausgebildet werden. In weiterer Ausgestaltung können auch andere Abstrahlgeometrien ausgebildet werden. Hierfür können an bzw. in dem lichtdurchlässigen Bereich verschiedene Elemente ausgebildet sein, um das von der Lichtquelle abgestrahlte Licht zu lenken, beispielsweise Linsen, Reflexionsflächen und/ oder Anfasungen.

Durch die Anordnung, Anzahl, Form und/oder Farbe des lichtdurchlässigen Bereiches können unterschiedliche Lichteffekte und -verteilungen realisiert werden, beispielsweise Figuren, Muster, Buchstaben oder Schriftzeichen. So kann einerseits ein Markierungs- bzw. Orientierungslicht gestaltet und darüber hinaus eine zusätzliche Information dargestellt werden. Hierdurch können neben der reinen Beleuchtungsfunktion auch Anwendungen im Bereich der Darstellung von Information oder der bisher an anderer Stelle angeordneten Signalisierung von Zuständen, z. B. Alarme oder Überbelastungen, realisiert werden.

Im Rahmen der Erfindung kann als lichtdurchlässiger Bereich ein transparenter Einsatz oder ein lichtleitender Körper verstanden werden, der das Licht nutzerseitig abstrahlt. Der lichtdurchlässige Bereich kann lösbar in einem Rahmen an dem Beleuchtungsteil befestigt werden, um im Bedarfsfall einen Austausch zu ermöglichen. Vorteilhafterweise können formschlüssige Aufnahmen ausgestaltet werden, in denen optional komplementäre Rastmittel eine zusätzliche Fixierung schaffen können. In einer weiteren Ausführung sind jedoch auch unlösbare Verbindungen möglich, die vorzugsweise klebend erfolgen. Besonders vorteilhaft ist ein verstellbares Element, dessen Grundmaterial lichtdurchlässig oder lichtleitend ausgebildet ist, so dass keine Einsätze im Beleuchtungsteil notwendig sind.

In einer vorteilhaften Ausgestaltung kann der lichtdurchlässige Bereich als lichtverteilender Körper ausgebildet sein, in den das Licht von einer Lichtquelle eingestrahlt wird. Der lichtleitende Körper hat den Vorteil, dass Licht abstrahlende Flächen an Positionen angeordnet werden können, die beispielsweise für die Anordnung einer Lichtquelle ungeeignet sind. Darüber hinaus ermöglicht der lichtverteilende Körper der Lichtquelle einen größeren Abstrahlbereich. Da die Abstrahlung einer identischen Lichtmenge über eine große Fläche weniger grell und blendend empfunden wird, ist die Verwendung eines lichtverteilenden Körpers von Vorteil. Insbesondere durch die Gestaltung des Abstrahlbereiches lassen sich unterschiedliche Lichteffekte und -verteilungen definieren, vorzugsweise finden angefaste oder abgestufte Abstrahlbereiche Verwendung. Der lichtverteilende Körper kann Acrylglas enthalten. Dabei können polierte Flächen eine vorwiegend reflektierende und angeraute Flächen mit einer vorwiegend emittierenden Wirkung aufweisen.

Durch eine Anpassung der Oberfläche des Sichtteiles des verstellbaren Elementes kann eine nahezu vollständige Integration in die umgebende Oberfläche des Frontelementes erreicht werden. Vorteilhafterweise kann die Oberfläche im gleichen Design wie das Frontelement gestaltet werden. Hierfür kann das Sichtteil beispielsweise bedruckt, laminiert oder beklebt werden. Im unbenutzten Zustand kann eine einheitliche Oberfläche geschaffen werden, die gegenüber Standardausstattungen das gleiche Erscheinungsbild ermöglicht. Gerade bei hochwertigen oder anspruchvoll gestalteten Oberflächen ist dies nutzerseitig erwünscht. Die Beleuchtungsfunktion ist quasi unsichtbar in das Installationsgerät integriert. Die Beleuchtungselemente befinden sich in einer vergleichsweise geschützten Position, so dass Beschädigungen oder Manipulationen nicht möglich sind. Selbst im genutzten Zustand kann eine weitgehende Integration des verstellbaren Elementes an die Optik des Frontelementes realisiert werden.

Des Weiteren kann das Sichtteil bzw. deren Oberfläche vollständig oder teilweise lichtdurchlässig ausgebildet sein und ebenfalls zur Beleuchtung oder Informationsanzeige genutzt werden. Hierdurch können neben der reinen Beleuchtungsfunktion durch das Beleuchtungsteil zusätzlich oder alternativ Anwendungen im Bereich der Darstellung von Information oder der bisher an anderer Stelle angeordneten Signalisierung von Zuständen realisiert werden.

Das Licht kann von einer oder mehreren Lichtquellen erzeugt werden und direkt oder über zumindest einen lichtleitenden Körper (Lichtleiter, Linse) zum Beleuchtungsteil des verstellbaren Elementes transferiert werden. Vorteilhafterweise kann ein lichtleitender Körper als ein- oder mehrteiliges Bauteil ausgebildet sein, welches sowohl den Lichtaustritt im lichtdurchlässigen Bereich des verstellbaren Elementes als auch die Lichtleitung von einer im Gerätesockel angeordneten Lichtquelle realisiert. Die Lichtquelle und/oder der lichtleitende Körper können austauschbar am Gerätesockel angeordnet sein und können auf einem Trägerelement beispielsweise einer Platine, einem Sockel oder einem Gehäuse montiert sein. In weiterer Ausgestaltung kann die Lichtquelle und/oder der lichtleitende Körper am Frontelement angeordnet sein und ein Beleuchtungsmodul bilden, das bei der Montage an dem Gerätesockel selbsttätig elektrisch und/oder optisch kontaktiert. Als Lichtquellen eignen sich Leuchtdioden (LED's, OLED's), Laserdioden, Glimmlampen, Kaltkathodenlampen, Glühlampen oder e-lektrolumineszierende Lampen (EL-Folie).

Vorteilhafterweise können die Beleuchtungsfunktionen nutzer-, verbrauchs-, zeit-, programm- oder ereignisabhängig gesteuert werden, wobei ein entsprechendes drahtloses oder drahtgebundenes (Bus-)Signal in die Stromversorgung der Lichtquelle eingreift. Dabei können im einfachsten Fall manuell zu bedienende Befehlgeber (Schalter, Taster) an dem Installationsgerät vorhanden sein, die beispielsweise die Lichtquelle ein- und ausschalten und/oder das erzeugte Licht beeinflussen. In einer vorteilhaften Ausführungsform kann die Lichtquelle durch ein Verschwenken des verstellbaren Elementes ein- bzw. ausgeschaltet werden. In einer weiteren Ausführungsform kann ein Dämmerungsschalter vorgesehen sein, der die Beleuchtung des Installationsgerätes erst bei unzureichenden Lichtverhältnissen aktiviert. In einer weiteren Ausführungsform kann ein Bewegungsmelder vorgesehen sein, der die Beleuchtung des Installationsgerätes erst bei Anwesenheit einer Person aktiviert. Des weiteren kann eine Aktivierung der Beleuchtung durch weitere interne und/oder externe Signalgeber möglich sein, z. B. zeit-, programm- oder ereignisgesteuert (Transponder). So braucht der Beleuchtung keine Energie zugeführt werden, wenn die Beleuchtung aufgrund ausreichender Lichtverhältnisse oder Nichtnutzung von Räumen überflüssig ist.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: eine perspektivische Darstellung eines elektrischen Installationsgerätes mit einem verstellbaren Element in einem eingeschobenen Zustand,
- Fig. 2: eine perspektivische Darstellung eines elektrischen Installationsgerätes mit einem verstellbaren Element in einem ausgezogenen Zustand,

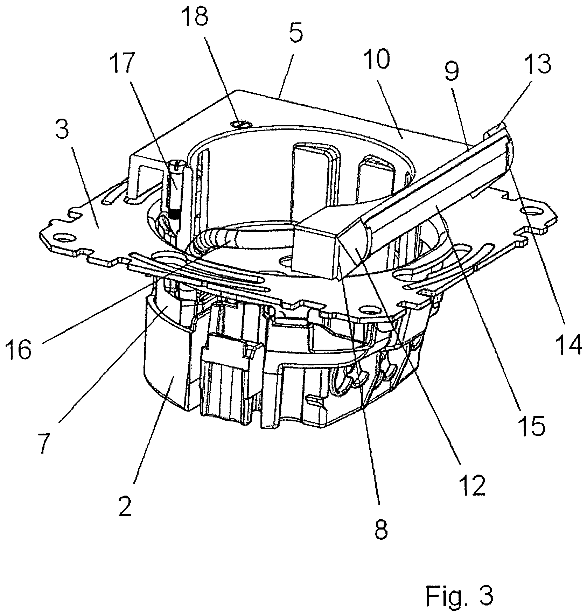

- Fig. 3: eine perspektivische und teilweise geschnittene Darstellung eines elektrischen Installationsgerätes mit einem verstellbaren Element in einem ausgezogenem Zustand und

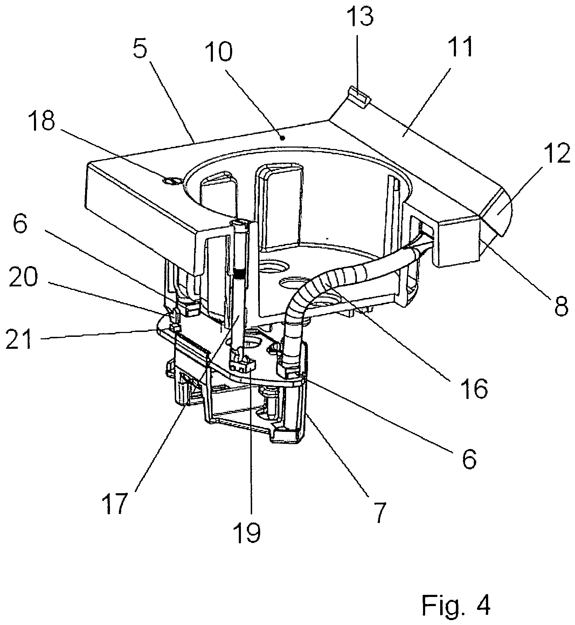

- Fig. 4: eine weitere perspektivische und teilweise geschnittene Darstellung eines elektrischen Installationsgerätes mit einem verstellbaren Element in einem ausgezogenen Zustand.

Gleiche oder gleichwirkende Bauteile sind in der nachfolgenden Beschreibung mit gleichen Bezugszeichen versehen.

Nachfolgend wird der Aufbau und die Funktionsweise eines erfindungsgemäßen elektrischen Installationsgerätes 1 schematisch anhand von Ausführungsbeispielen näher beschrieben.

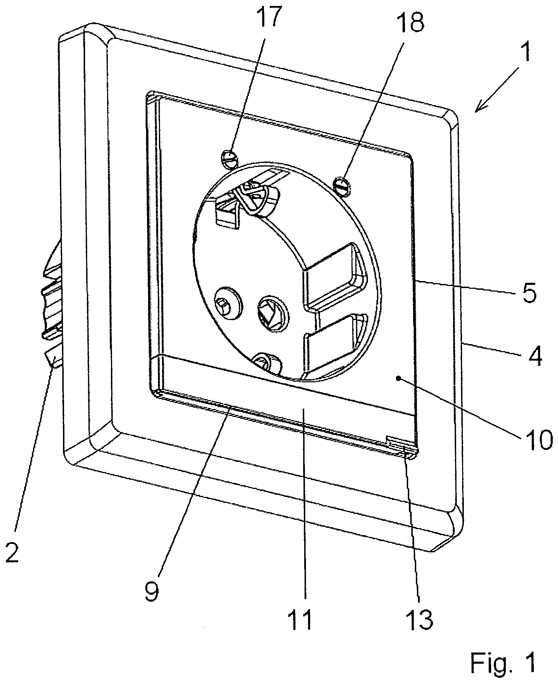

In Fig. 1 ist das elektrische Installationsgerät 1 als elektrische Steckdose ausgeführt. Das elektrische Installationsgerät 1 kann in einem nicht dargestellten Installationsgehäuse befestigt werden, welches ortsfest in einer Gebäudewand fixiert ist. Das elektrische Installationsgerät 1 weist einen Gerätesockel 2 auf, den außenseitig ein Tragrahmen 3 umgibt, der die Befestigung des elektrischen Installationsgerätes 1 in dem Installationsgehäuse ermöglicht. Frontseitig ist ein mehrteiliges Frontelement 4 befestigt, das einen Zentraleinsatz 5 zur Aufnahme eines nicht dargestellten Gerätesteckers aufweist. In dem Gerätesockel 2 sind nicht dargestellte Klemmen zum Anschluss von Versorgungsleitungen und des weiteren metallische Kontaktelemente angeordnet, in die frontseitig Steckerstifte des Gerätesteckers gesteckt werden können. Des weiteren sind Lichtquellen 6 in Form von LED's und weitere elektrische und/oder optische Bauteile zur Spannungsversorgung und Lichtsteuerung in einem steckbaren Modul 7 am Gerätesockel 2 angeordnet.

In dem Zentraleinsatz 5 des Frontelementes 4 ist bodenseitig in einer Aufnahme 8 ein länglich ausgebildetes und axial verstellbares Element 9 angeordnet. Das verstellbare Element 9 besteht aus einem Material und Design gemäß dem Zentraleinsatz 5, so dass nutzerseitig eine einheitliche Oberfläche 10 entsteht. Das verstellbare Element 9 ist einstückig gefertigt und weist einen Sichtteil 11 und einen Beleuchtungsteil 12 auf, die winklig zueinander angeordnet sind. An dem Sichtteil 11 ist ein Handhabungselement 13 ausgebildet, um das Element 9 verstellen zu können. Das Element 9 lässt sich reibschlüssig verstellen, wobei erhöhte Reibwerte vordefinierte Positionen vorgeben. Das verstellbare Element 9 ermöglicht Positionen zwischen 0 und 45 Grad zur Oberfläche 10 des Frontelementes 4.

Das Beleuchtungsteil 12 des verstellbaren Elementes 9 weist einen Rahmen 14 zur Aufnahme eines streifenförmigen lichtdurchlässigen Bereiches 15 auf. Der lichtdurchlässige Bereich 15 ist als streifenförmiger lichtleitender Körper ausgebildet, der rückseitig in zwei röhrenförmige Lichtleiter 16 übergeht, die beiderseits des Zentraleinsatzes 5 verlaufen und an im Gerätesockel 2 angeordneten Lichtquellen 6 enden. Die röhrenförmigen Lichtleiter 16 des lichtleitenden Körpers 15 sind an dem Zentraleinsatz 5, vorzugsweise lösbar, befestigt.

In dem Zentraleinsatz 5 befinden sich zwei Wellen 17 und 18, die durch den Zentraleinsatz 5 nach außen geführt sind und nutzerseitig gedreht werden können. Die Welle 17 wirkt auf einen an dem Modul 7 angeordneten Schalter 19, der in die Stromversorgung der Lichtquellen 6 eingreift und ein Ein- und Ausschalten bei entsprechender Drehung der Welle 17 ermöglicht. Die weitere Welle 18 ist lichtleitend ausgebildet und leitet über eine Kontur 20 Umgebungslicht der Steckdose 1 auf ein an dem Modul 7 angeordnetes lichtempfindliches Bauteil 21. Das Bauteil 21 wertet das eingespeiste Licht aus und schaltet bei Unterschreiten eines definierten Helligkeitswertes die Lichtquellen 6 an. Durch Drehen der Welle 18 und einer damit verbundenen Positionsänderung der Kontur 20 über dem lichtempfindlichen Bauteil 21 wird eine Steuerung der Lichtquellen 6 in Abhängigkeit von einem Umgebungslicht des näheren Umfeldes des Installationsgerätes 1 ermöglicht.

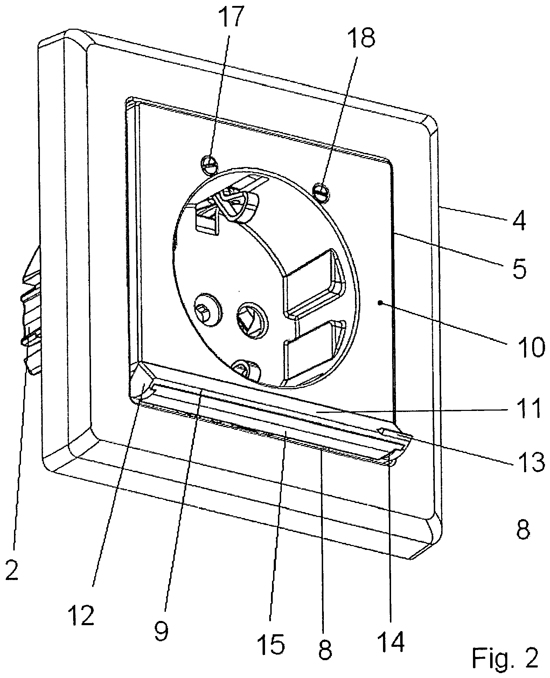

Gemäß Fig. 1 ist das verstellbare Element 9 im eingeschobenen Zustand flächig in den Zentraleinsatz 5 integriert und Licht wird gar nicht oder nur in geringem Maße abgestrahlt. In dieser Stellung sollten die Lichtquellen 6 aus wirtschaftlichen Gründen völlig ausgeschaltet werden. Durch Betätigung des Handhabungselementes 13 kann das verstellbare Element 9 aus dem eingeschobenen Zustand in Richtung des Nutzers verschwenkt werden (Fig. 2), wobei abgestufte Positionen, die durch Raststellungen bewirkt werden, vordefinierte Beleuchtungsflächen zulassen. Im Rahmen einer bedarfsgerechten Beleuchtungssteuerung können die Lichtquellen 6 erst bei einem Ausschwenken des verstellbaren Elementes 9 eingeschaltet werden.

### Bezugszeichenliste

- 1: Installationsgerät
- 2: Gerätesockel
- 3: Tragrahmen
- 4: Frontelement
- 5: Zentraleinsatz
- 6: Lichtquelle
- 7: Modul
- 8: Aufnahme
- 9: verstellbares Element
- 10: Oberfläche
- 11: Sichtteil
- 12: Beleuchtungsteil
- 13: Handhabungselement
- 14: Rahmen
- 15: lichtdurchlässiger Bereich
- 16: Lichtleiter
- 17: Welle
- 18: Welle
- 19: Schalter
- 20: Kontur
- 21: lichtempfindliches Bauteil

## Patentansprüche

1. Elektrisches Installationsgerät (1) umfassend einen Gerätesockel (2), der mittels eines Tragrahmens (3) in einem Installationsgehäuse befestigbar ist, ein frontseitig befestigtes Frontelement (4) mit einem Zentraleinsatz (5), und zumindest eine Lichtquelle (6), wobei im Gerätesockel (2) angeordnete Kontaktelemente an eine Netzspannung anschließbar sind, und wobei das Installationsgerät zumindest einen Beleuchtungsteil (12) mit zumindest einem lichtdurchlässigen Bereich (15) aufweist, durch den von der Lichtquelle (6) ausgestrahltes Licht nutzerseitig abstrahlbar ist,
**dadurch gekennzeichnet, dass**
in dem Zentraleinsatz (5) des Frontelementes (4) zumindest ein entlang eines Verstellweges verschwenkbares Element (9) angeordnet ist, das den Beleuchtungsteil (12) aufweist,
**dass** das verschwenkbare Element (9) eine Anpassung der abgestrahlten Lichtmenge an wechselnde Anforderungen ermöglicht, und **dass** mit dem verschwenkbaren Element (9) in Abhängigkeit von dem Verschwenkungsgrad von einer Vollbeleuchtung zu einer vollständigen Abdeckung der Beleuchtung variiert werden kann.

2. Elektrisches Installationsgerät nach Patentanspruch 1, **dadurch gekennzeichnet, dass** das Beleuchtungsteil (12) verdeckt in dem Frontelement (4) anordenbar ist.

3. Elektrisches Installationsgerät nach einem der vorhergehenden Patentansprüche, **dadurch gekennzeichnet, dass** das verstellbare Element (9) ein nutzerseitig angeordnetes Sichtteil (11) aufweist.

4. Elektrisches Installationsgerät nach Patentanspruch 3, **dadurch gekennzeichnet, dass** das Beleuchtungsteil (12) und das Sichtteil (11) winklig zueinander angeordnet sind.

5. Elektrisches Installationsgerät nach einem der Patentansprüche 3 oder 4, **dadurch gekennzeichnet, dass** das Sichtteil (11) in einem unbenutzten Zustand einheitlich zu einer Oberfläche (10) des Frontelementes (4) ausgebildet ist.

6. Elektrisches Installationsgerät nach einem der vorhergehenden Patentansprüche, **dadurch gekennzeichnet, dass** das verstellbare Element (9) schwenkbar an dem Frontelement (4) gelagert ist.

7. Elektrisches Installationsgerät nach einem der vorhergehenden Patentansprüche, **dadurch gekennzeichnet, dass** das verstellbare Element (9) stufenweise verstellbar ist.

8. Elektrisches Installationsgerät nach einem der vorhergehenden Patentansprüche, **dadurch gekennzeichnet, dass** das verstellbare Element (9) manuell oder motorisch verstellbar ist.

9. Elektrisches Installationsgerät nach einem der vorhergehenden Patentansprüche, **dadurch gekennzeichnet, dass** das verstellbare Element (9) bodenseitig angeordnet ist.

10. Elektrisches Installationsgerät nach einem der vorhergehenden Patentansprüche, **dadurch gekennzeichnet, dass** der lichtdurchlässige Bereich (15) als transparenter Körper oder als lichtleitender Körper ausgebildet ist.

11. Elektrisches Installationsgerät nach einem der vorhergehenden Patentansprüche, **dadurch gekennzeichnet, dass** der lichtdurchlässige Bereich (15) sich von dem Beleuchtungsteil (12) bis zu der Lichtquelle (6) erstreckt.

12. Elektrisches Installationsgerät nach einem der Patentansprüche 1 bis 10, **dadurch gekennzeichnet, dass** ein Lichtleiter (16) zwischen der Lichtquelle (6) und dem lichtdurchlässigen Bereich (15) angeordnet ist.

13. Elektrisches Installationsgerät nach einem der vorhergehenden Patentansprüche, **dadurch gekennzeichnet, dass** die Lichtquelle (6) an dem Gerätesockel (2) angeordnet ist und/oder an dem Frontelement (4) angeordnet ist.

14. Elektrisches Installationsgerät nach einem der vorhergehenden Patentansprüche, **dadurch gekennzeichnet, dass** die Lichtquelle (6) nutzer-, verbrauchs-, zeit-, programm- oder ereignisabhängig steuerbar ist.

## Claims

1. An electrical installation device (1) comprising a device base (2) which can be fastened in an installation housing by means of a support frame (3); a front element (4) fastened at the front side and having a central insert (5); and at least one light source (6), wherein contact elements arranged in the device base (2) are connectable to a mains voltage; and wherein the installation device has at least one illumination part (12) having at least one light-permeable region (15) through which light irradiated by the light source (6) can be irradiated at the user side,
**characterized in that**
at least one element (9) which is pivotable along an adjustment path and which has the illumination part (12) is arranged in the central insert (5) of the front element (4);
**in that** the pivotable element (9) allows an adaptation of the amount of irradiated light to changing demands; and
**in that** a variation is possible from a full illumination to a complete masking of the illumination in dependence on the degree of pivoting using the pivotable element (9).

2. An electrical installation device in accordance with claim 1, **characterized in that** the illumination part (12) can be arranged covered in the front element (4).

3. An electrical installation device in accordance with one of the preceding claims, **characterized in that** the adjustable element (9) has a viewing part (11) arranged at the user side.

4. An electrical installation device in accordance with claim 3, **characterized in that** the illumination part (12) and the viewing part (11) are arranged at an angle to one another.

5. An electrical installation device in accordance with one of the claims 3 or 4, **characterized in that** the viewing part (11) is configured uniformly with respect to a surface (10) of the front element (4) in an unused state.

6. An electrical installation device in accordance with any one of the preceding claims, **characterized in that** the adjustable element (9) is pivotably supported at the front element (4).

7. An electrical installation device in accordance with any one of the preceding claims, **characterized in that** the adjustable element (9) is adjustable step-wise.

8. An electrical installation device in accordance with any one of the preceding claims, **characterized in that** the adjustable element (9) is manually adjustable or adjustable by a motor.

9. An electrical installation device in accordance with any one of the preceding claims, **characterized in that** the adjustable element (9) is arranged at the base side.

10. An electrical installation device in accordance with any one of the preceding claims, **characterized in that** the light-permeable region (15) is configured as a transparent body or as a light-conductive body.

11. An electrical installation device in accordance with any one of the preceding claims, **characterized in that** the light-permeable region (15) extends from the illumination part (12) up to the light source (6).

12. An electrical installation device in accordance with any one of the claims 1 to 10, **characterized in that** a light guide (16) is arranged between the light source (6) and the light-permeable region (15).

13. An electrical installation device in accordance with any one of the preceding claims, **characterized in that** the light source (6) is arranged at the device base (2) and/or is arranged at the front element (4).

14. An electrical installation device in accordance with any one of the preceding claims, **characterized in that** the light source (6) can be controlled in dependence on the user, the consumption, the time, the program or the event.

## Revendications

1. Appareil d'installation électrique (1) comprenant un socle d'appareil (2) susceptible d'être fixé dans un boîtier d'installation au moyen d'un cadre porteur (3), un élément frontal (4) fixé du côté frontal et pourvu d'un insert central (5), et au moins une source de lumière (6),
dans lequel
des éléments de contact agencés dans le socle d'appareil (2) peuvent être connectés à une tension de réseau,
et l'appareil d'installation comprend au moins une partie d'éclairage (12) pourvue d'au moins une zone (15) translucide permettant d'émettre du côté utilisateur une lumière émise par la source de lumière (6),
**caractérisé en ce que**
au moins un élément (9) susceptible de pivoter le long d'un trajet de pivotement est agencé dans l'insert central (5) de l'élément frontal (4), qui comprend la partie d'éclairage (12),
l'élément pivotant (9) permet une adaptation de la quantité de lumière émise à des exigences changeantes, et
l'élément pivotant (9) permet une variation depuis une illumination complète jusqu'à un recouvrement complet de l'illumination, en fonction du degré de pivotement.

2. Appareil d'installation électrique selon la revendication 1,
**caractérisé en ce que**
la partie d'éclairage (12) est susceptible d'être agencée de façon recouverte dans l'élément frontal (4).

3. Appareil d'installation électrique selon l'une des revendications précédentes,
**caractérisé en ce que**
l'élément réglable (9) comprend une partie visible (11) agencée du côté utilisateur.

4. Appareil d'installation électrique selon la revendication 3,
**caractérisé en ce que**
la partie d'éclairage (12) et la partie visible (11) sont agencées sous un angle l'une par rapport à l'autre.

5. Appareil d'installation électrique selon l'une des revendications 3 ou 4, **caractérisé en ce que**
dans un état non utilisé, la partie visible (11) est réalisée de façon uniforme avec une surface (10) de l'élément frontal (4).

6. Appareil d'installation électrique selon l'une des revendications précédentes,
**caractérisé en ce que**
l'élément réglable (9) est monté sur l'élément frontal (4) de manière à pouvoir pivoter.

7. Appareil d'installation électrique selon l'une des revendications précédentes,
**caractérisé en ce que**
l'élément réglable (9) est réglable graduellement.

8. Appareil d'installation électrique selon l'une des revendications précédentes,
**caractérisé en ce que**
l'élément réglable (9) est réglable manuellement ou par voie motrice.

9. Appareil d'installation électrique selon l'une des revendications précédentes,
**caractérisé en ce que**
l'élément réglable (9) est agencé du côté fond.

10. Appareil d'installation électrique selon l'une des revendications précédentes,
**caractérisé en ce que**
la zone translucide (15) est réalisée sous forme de corps transparent ou sous forme de corps conducteur de lumière.

11. Appareil d'installation électrique selon l'une des revendications précédentes,
**caractérisé en ce que**
la zone translucide (15) s'étend depuis la partie d'éclairage (12) jusqu'à la source de lumière (6).

12. Appareil d'installation électrique selon l'une des revendications 1 à 10, **caractérisé en ce que**
un guide de lumière (16) est agencé entre la source de lumière (6) et la zone translucide (15).

13. Appareil d'installation électrique selon l'une des revendications précédentes,
**caractérisé en ce que**
la source de lumière (6) est agencée sur le socle d'appareil (2) et/ou sur l'élément frontal (4).

14. Appareil d'installation électrique selon l'une des revendications précédentes,
**caractérisé en ce que**
la source de lumière (6) est pilotable en fonction de l'utilisateur, de la consommation, du temps, d'un programme ou d'un événement.
